# EUROPÄISCHE PATENTANMELDUNG

(11) **EP 4 700 655 A1**
(43) Veröffentlichungstag der Anmeldung: **25.02.2026**
(21) Anmeldenummer: 25190851.3
(22) Anmeldetag: 22.07.2025
(51) Int. Cl.: G06N 3/0475

(54) **KI IN ELEKTRONISCHEM ENDGERÄT**

(30) Priorität: 19.08.2024 DE 202024104680 U
(71) Anmelder: InfinitiSpark GmbH, 47053 Duisburg (DE)
(72) Erfinder: Ahmadi, Nima, 47053 Duisburg (DE)
(74) Vertreter: Andrejewski - Honke Patent- und Rechtsanwälte Partnerschaft mbB

(57) **Zusammenfassung**

Gegenstand der Erfindung ist ein benutzerspezifisches elektronisches Endgerät, insbesondere an das Nutzeralter angepasstes Endgerät, zur akustischen und/oder optischen und/oder haptischen Wiedergabe von Inhalt, der unter Verwendung eines generativen Models auf Basis künstlicher Intelligenz erzeugt wird, wobei der erzeugte Inhalt an den Benutzer angepasst ist, wobei das Erzeugen des Inhalts unter Verwendung des generativen Models auf Grundlage einer nutzerspezifischen Vorlage geschieht, wobei die nutzerspezifische Vorlage eine dem Nutzerprofil zugeordnete Nutzerpräferenz sowie das Nutzeralter enthält.

## Beschreibung

Die Erfindung betrifft ein benutzerspezifisches bzw. nutzerspezifisches elektronisches Endgerät zur Wiedergabe von Inhalt.

Elektronische Endgeräte zur Wiedergabe von Inhalten sind in der Praxis allgemeinhin bekannt, wie z. B. Tablets zur Wiedergabe von Bild, Video oder Textinhalten. Ebenfalls bekannt ist das Anpassen eines elektronischen Endgeräts auf die Bedürfnisse des Benutzers. Inhaltswiedergebende benutzerspezifische elektronische Endgeräte sind z. B. Plüschtiere mit elektronischer Wiedergabefunktion für Kleinkinder oder personalisierte Tablets zur Wiedergabe von Inhalten auf einem Display. Diese benutzerspezifischen Endgeräte greifen dabei auf den allgemeinhin in der Praxis bekannten Medienpool (beispielsweise aus dem Internet) zurück, um so als Unterhaltungsendgerät für den Benutzer verwendet zu werden.

Das Erstellen von Inhalten, insbesondere in der Medienbranche, stellt seit jeher einen wesentlichen Bestandteil der Unterhaltungsindustrie dar. Das Erstellen von Inhalten mithilfe von generativer künstlicher Intelligenz gewinnt dabei stetig an Bedeutung. Die Verwendung von generativer KI, um Inhalte sofort und in großer Zahl zu erzeugen, ermöglicht es auf besonders schnelle und effiziente Art und Weise, Inhalte zu erstellen, die für verschiedene Zielgruppen und Zwecke personalisiert sein können.

Dieses Prinzip der Verwendung von generativer künstlicher Intelligenz wird beispielsweise in der DE 10 2023 120 666 A1 beschrieben. Die vorgenannte Schrift beschreibt demnach ein Verfahren zur Erzeugung von Inhalt, welcher unter Verwendung eines generativen Modells erzeugt wird. Dabei werden die Inhalte einem Benutzerprofil zugeordnet, sodass die Erzeugung des Inhaltes seitens des generativen Modells aufgrund einer dem Benutzerprofil zugeordneten Nutzerpräferenz stattfindet. Zudem wird eine Zielnutzervorrichtung zum Anzeigen des Inhaltes beschrieben.

Inhalte, welche unter Verwendung eines generativen Modells erzeugt werden, werden in der Regel auf in der Praxis bekannten Endgeräten, wie z. B. Computern, Tablets oder Smartphones wiedergegeben. Eine Individualisierung des Endgeräts auf den Benutzer findet im Stand der Technik keine Anwendung.

Hier schafft die Erfindung insgesamt Abhilfe. Der Erfindung liegt somit das technische Problem zugrunde, ein derartiges elektronisches Endgerät so weiterzuentwickeln, um ein an den Benutzer angepasstes Endgerät bereitzustellen.

Zur Lösung dieser technischen Problemstellung sieht die Erfindung ein benutzerspezifisches elektronisches Endgerät, insbesondere an das Benutzeralter angepasste Endgerät, zur akustischen und/oder optischen und/oder haptischen Wiedergabe von Inhalt vor, der unter Verwendung eines generativen Models auf Basis künstlicher Intelligenz erzeugt wird, wobei der erzeugte Inhalt an den Benutzer angepasst ist, wobei das Erzeugen des Inhalts unter Verwendung des generativen Models auf Grundlage einer nutzerspezifischen Vorlage geschieht, und wobei die nutzerspezifische Vorlage eine dem Nutzerprofil zugeordnete Nutzerpräferenz sowie das Benutzeralter enthält.

Der Begriff des generativen Modells auf Basis künstlicher Intelligenz meint erfindungsgemäß im weitesten Sinne ein inhaltserzeugendes und zumindest teilweise selbstlernendes Modell, welches in Echtzeit Inhalte generiert. Erfindungsgemäß wird unter anderem und nicht einschränkend unter Einsatz sogenannter großer Sprachmodelle (Englisch: Large Language Model, LLM) gearbeitet. Diese Art der künstlichen Intelligenz sorgt dafür, in Echtzeit die durch die Erfindung angezeigten bzw. wiedergegebenen Inhalte zu generieren und theoretisch unbegrenzt fortsetzen zu können. Diese sogenannten großen Sprachmodelle stellen in der Regel computerlinguistische Wahrscheinlichkeitsmodelle dar, die statistische Wort- und Satzfolge-Beziehungen aus einer Vielzahl von Textdokumenten durch vorherige Trainingsprozesse erlernt haben. Diese können entsprechende Inhalte in theoretisch unendlicher Länge generieren und ausgeben.

Der wiederzugebende Inhalt umfasst erfindungsgemäß beispielsweise Texte, Bilder, Videos, Audioinhalte sowie Kombinationen der vorgenannten Beispiele.

Das Erzeugen des Inhalts geschieht erfindungsgemäß unter Verwendung des generativen Modells auf Grundlage einer nutzerspezifischen Vorlage. Diese nutzerspezifische Vorlage enthält eine dem Nutzerprofil zugeordnete Nutzerpräferenz sowie das Benutzeralter. Zusätzlich können weitere Merkmale in das Nutzerprofil integriert sein, beispielsweise das Geschlecht, Charaktereigenschaften oder Stimmungen. Die Erfindung arbeitet demzufolge beispielhaft so, dass der Benutzer das Benutzeralter sowie eine Nutzerpräferenz, beispielsweise die Vorliebe für Tiergeschichten, in das Nutzerprofil einpflegt. Dieses Nutzerprofil wird in der Folge dem generativen Modell zur Verfügung gestellt, und zwar in Form der nutzerspezifischen Vorlage, wobei die nutzerspezifische Vorlage neben dem Nutzerprofil weitere nutzerbezogene Daten, z. B. werkseitig voreingestellte Daten, enthalten kann. Ebenfalls denkbar ist es, dass das Nutzerprofil eine Nutzungshistorie bzw. einen Abspielverlauf aufweist und diesen fortlaufend ergänzt. Ferner ist es möglich, seitens des Nutzers nach und/oder bereits während der Nutzung ein Nutzerfeedback zu dem erzeugten Inhalt im Nutzerprofil zu hinterlegen. Ferner ist das Nutzerprofil bevorzugt so ausgestaltet, dass es sich mit fortlaufender Nutzung, und gegebenenfalls in Abhängigkeit des erzeugten Inhaltes sowie des gegebenen Feedbacks, das Nutzerprofil selbstständig an die Vorzüge des Benutzers anpasst.

Bevorzugt umfasst der erzeugte Inhalt nutzerspezifische Geschichten, insbesondere Erzählgeschichten. Ebenfalls denkbar sind Lerngeschichten und - z. B. für ältere Nutzer - Geschichten zu Förderung des Erinnerungsvermögens. Geschichten, insbesondere Erzählgeschichten, sind erfindungsgemäß als eine literarische Form zu verstehen, die eine zusammenhängende, in sich schlüssige Handlung beschreibt. Die beschriebene Handlung kann dabei abgeschlossen oder offen gestaltet sein. In der Regel weist eine Erzählgeschichte eine klare Struktur mit Einleitung, Hauptteil und Schluss auf. In Erzählgeschichten werden Charaktere eingeführt, eine Ausgangssituation beschrieben, Konflikte oder Herausforderungen dargestellt und gegebenenfalls eine Lösung oder ein Ende der Geschichte präsentiert. Erfindungsgemäße Geschichten können sowohl realistische als auch fiktionale Elemente enthalten und unter Verwendung von bestimmten Themen, Moralvorstellungen oder menschlichen Erfahrungen, Werte vermitteln. Die Erzählweise erfindungsgemäßer Geschichten kann variieren, von einem Ich-Erzähler, der die Geschichte aus der eigenen Perspektive schildert, bis hin zu einem allwissenden Erzähler, der die Geschehnisse aus einer übergeordneten Sicht beschreibt. Besonders vorteilhaft arbeitet die Erfindung dabei so, dass die nutzerspezifische Vorgabe mit der dem Nutzerprofil zugeordneten Nutzerpräferenz sowie dem Benutzeralter dafür sorgt, dass präferierte Themen und/oder Charaktere an den Benutzer angepasst und in die Geschichte implementiert werden können.

Bevorzugt arbeitet die Erfindung so, dass die erzeugten Geschichten insbesondere an das Benutzeralter angepasst sind und nutzeralterspezifischen, beispielsweise endgerätseitig festgelegten, Rahmenparametern folgen. Das Benutzeralter stellt erfindungsgemäß den relevantesten Rahmenparameter für den zu erzeugenden Inhalt dar und definiert einen großen Teil der zu erzählenden Geschichte. Beispielsweise führt ein bestimmtes Benutzeralter, z. B. von unter 16, dazu, dass nicht jugendfreie Inhalte und Themen ausgeschlossen werden. Grundsätzlich sind diese Rahmenparameter nicht als statische, sondern als dynamische Parameter zu verstehen, die sich zeitabhängig verändern können.

Das Sprachmodell richtet sich bevorzugt nach dem Benutzer, insbesondere ist die Erzählweise und Sprachkomplexität an das Benutzeralter angepasst. Ein für beispielsweise Kleinkinder geeignetes Endgerät, wobei endgerätseitig das Benutzeralter bereits voreingestellt, bzw. in das Nutzerprofil integriert ist, wählt eine einfache Erzählweise aus. Die Geschichtenkomplexität und/oder Sprachkomplexität wird in Abhängigkeit des, bevorzugt endgerätseitig voreingestellten, Benutzeralters angepasst.

Ferner ist das Endgerät bevorzugt so ausgeprägt, dass der benutzerspezifische Inhalt während der Wiedergabe vom Benutzer durch eine Benutzereingabe beeinflusst werden kann. Die Benutzereingabe kann auf verschiedene Art und Weise geschehen, beispielhaft durch Spracheingabe, Tasteneingabe, oder durch ein externes Medium. Die Beeinflussung des benutzerspezifischen Inhalts während der Wiedergabe ermöglicht es besonders vorteilhaft, unmittelbar in den Inhalts- bzw. Geschichtenverlauf einzugreifen. So kann durch den Benutzer nach Beginn der Geschichtenerzählung beispielsweise der Hauptcharakter geändert werden. Das generative Modell ist dazu in der Lage, den Geschichtenverlauf unmittelbar nach der Benutzereingabe auf die dortigen Ansprüche anzupassen. Ebenso umfasst ist die Möglichkeit, eine bereits teilweise oder vollständig abgeschlossene Geschichte durch eine Benutzereingabe erneut, jedoch mit durch die Benutzereingabe beeinflussten Änderungen, zu beginnen. Erfindungsgemäß ist ebenfalls umfasst, dass der Benutzer nach Beendigung einer Geschichte eine Benutzereingabe, einen Speicherwunsch und/oder eine Markierung, wie beispielsweise eine Favoritenmarkierung, an die abgeschlossene Geschichte anheftet, sodass sich zu einem späteren Zeitpunkt auf diese Geschichte bezogen werden kann. Eine Benutzereingabe, wo beispielsweise der Hauptprotagonist einer bereits abgeschlossenen Geschichtenerzählung ausgetauscht werden soll, kann dann zu einem späteren Zeitpunkt erneut, mit den auf die Benutzereingabe abgestimmten Änderungen, konsumiert werden.

Das bereits angesprochene Nutzerprofil berücksichtigt bevorzugt Ausschlusskriterien. Diese Ausschlusskriterien sind zum einem bereits durch das Benutzeralter zumindest teilweise in das Nutzerprofil integriert. Benutzerseitig können ergänzende Ausschlusskriterien manuell, beispielsweise durch eine Eingabe am Endgerät, hinzugefügt werden. Der von dem generativen Modell erzeugte Inhalt berücksichtigt in der Folge die hinzugefügten Ausschlusskriterien. Beispielsweise kann ein Benutzer mit einer bestimmten Phobie vor Tieren und/oder Themen diese als Ausschlusskriterien in die Nutzerpräferenz einpflegen, um so sicherzustellen, dass der erzeugte Inhalt bwz. die erzeugte Geschichte diese Tiere bzw. Themen nicht behandelt. Benutzeralterspezifische Ausschusskriterien sind bevorzugt bereits endgerätseitig voreingestellt, beispielsweise der Ausschluss von nicht jugendfreien Inhalten für Endgeräte, die eine minderjährige Benutzergruppe ansprechen.

Bevorzugt ist das Endgerät so ausgeprägt, dass die Nutzerpräferenz auf einer fragebogenbasierten Festlegung von Rahmenparametern basiert. Diese fragebogenbasierte Festlegung umfasst bevorzugt Themen, literarische Genres, wie beispielweise Krimi oder Fantasy, Lieblingsschriftsteller, Lieblingstiere und Lieblingsfarben, Lieblingsmusik etc. Ausgehend von dieser Nutzerpräferenz wird ein Nutzerprofil erstellt, welches als zusätzlichen Rahmenparameter das Benutzeralter enthält, welches wiederum in die nutzerspezifische Vorlage eingepflegt wird, auf wessen Grundlage das generative Modell den Inhalt erzeugt. Vorteilhaft kann der zur Festlegung von Rahmenparametern verwendete Fragebogen ebenfalls KI-generiert sein. Denkbar ist es zudem, dass während des Ausfüllens seitens des Benutzers der Fragebogen anpassbar ist. So ist es beispielsweise möglich, dass, sobald der Benutzer seine Vorliebe für eine bestimmte Thematik im Fragebogen ausdrückt, KI-generiert weitere Unterfragen bzw. Unterthematiken, welche sich auf das vom Benutzer bevorzugte Themengebiet beziehen, erstellt und abgefragt werden. So kann besonders vorteilhaft eine detaillierte Nutzerpräferenz mit spezifischen Rahmenparametern bereitgestellt werden.

Bevorzugt weist das Endgerät nutzerspezifische Formfaktoren auf. Formfaktoren im erfindungsgemäßen Sinne meinen im weitesten Sinne physische Ausprägungen und/oder Unterscheidungsmerkmale mit Wiedererkennungswert, welche insbesondere an das Benutzeralter angepasst sind.

Bevorzugt umfassen die nutzerspezifischen Formfaktoren Avatare und/oder Tiere und/oder Farbakzente. Die nutzerspezifischen Formfaktoren orientieren sich bevorzugt an dem Benutzeralter. Avatare als Formfaktoren meinen beispielsweise Figuren, wie z. B. berufsbezeichnende Figuren wie Astronaut, Arzt, Fußballspieler etc. Formfaktoren wie Tiere können verschiedene Tierarten, insbesondere als Plüschtier oder ähnliches ausgeprägte Tierarten sein. Die nutzerspezifischen Formfaktoren sind bevorzugt zumindest als teilweise in das Endgerät integrierte Formfaktoren ausgebildet. Ebenfalls umfasst sind Formfaktoren, welche das gesamte Endgerät darstellen.

Ferner weist das Endgerät bevorzugt eine nutzerspezifische bzw. benutzerspezifische Tastensteuerung auf. Die benutzerspezifische Tastensteuerung orientiert sich größtenteils an dem Benutzeralter. In einer Ausprägung ist die Tastensteuerung variabel in Größe und Komplexität anpassbar. Eine für Kleinkinder geeignete Tastensteuerung kann beispielsweise lediglich ein simples Layout mit wenigen und einfach zu bedienenden Tasten sein. Ein Endgerät mit Tastensteuerung für beispielsweise Erwachsene kann demgegenüber komplexer gestaltet sein und vergleichsweise mehr Einstellmöglichkeiten aufweisen. Sensoren zur Steuerung des Endgeräts, beispielsweise durch Gesten oder Bewegungen seitens des Benutzers, sind ebenfalls erfindungsgemäß umfasst.

Die Wiedergabe des erzeugten Inhalts erfolgt bevorzugt durch eine optische Inhaltswiedergabe, beispielsweise über ein Display und/oder LEDs. Ein solches Display ist besonders bevorzugt in zentraler Position angeordnet. Eine optische Inhaltswiedergabe in Form von LED-Lichtsignalen kann beispielsweise außenseitig am Endgerät erfolgen. Die optische Inhaltswiedergabe über ein Display in Kombination mit LEDs erfolgt bevorzugt in Abstimmung der Inhaltswiedergabe aufeinander.

Ferner erfolgt die haptische Wiedergabe bevorzugt über Vibrationen und/oder Bewegungen seitens des Endgeräts. Die Bewegungen seitens des Endgeräts können beispielsweise Bewegungen eines als Plüschtier ausgeprägten Endgeräts sein, wobei z. B. bestimmte Körperteile bewegt werden. Die haptische Wiedergabe sorgt vorteilhaft dafür, dass der Benutzer eine möglichst stimulierende Inhaltswiedergabe erfährt.

Das Endgerät ist erfindungsgemäß so ausgebildet, dass die akustische Wiedergabe des Inhalts bevorzugt als Sprachausgabe, beispielsweise über zumindest einen Lautsprecher, erfolgt. Die Sprachausgabe erfolgt bevorzugt unter Berücksichtigung der nutzerspezifischen Vorlage, sodass das Benutzeralter ebenfalls Berücksichtigung in der Sprachausgabe findet. Die unter Berücksichtigung der benutzerspezifischen Vorlage erzeugte Sprachausgabe kann bevorzugt als Stimme und wahlweise als Stimmenimitation ausgeprägt sein. Stimmenimitationen von beispielsweise Synchronsprechern oder weiteren Personen der Öffentlichkeit sind denkbar. Ferner sind den Inhalten angemessene weitere akustische Inhalte wiedergebbar, beispielsweise Geräusche, wie z. B. Tierlaute, Motorgeräusche oder Ähnliches. Die die akustische Wiedergabe ausführenden Lautsprecher sind bevorzugt zentral am Endgerät verortet. Ebenfalls denkbar sind mehrere außenseitig verortete Lautsprecher.

Die Eingabe seitens des Benutzers erfolgt bevorzugt als Spracheingabe, beispielsweise mithilfe eines Mikrofons. Das Mikrofon ist besonders bevorzugt zentral am Endgerät verortet, kann jedoch auch außenseitig und in mehrfacher Ausführung vorhanden sein. Die Spracheingabe seitens des Benutzers kann beispielsweise als Befehlsform oder in ganzen Sätzen stattfinden. Die Spracheingabe umfasst bevorzugt die Möglichkeit, eine KI-basierte Spracherkennung durchzuführen.

Ferner ist das Endgerät erfindungsgemäß so ausgelegt, dass die Inhaltswiedergabe in einem vom Benutzer festgelegten Rahmen, insbesondere zeitlichen Rahmen, erfolgt. Der zeitliche Rahmen kann wahlweise in das Nutzerprofil eingepflegt werden oder beispielsweise als Spracheingabe vor Beginn der Inhaltserzeugung festgelegt werden. Insbesondere in Bezug auf Erzählgeschichten als auszugebener Inhalt ist der zeitliche Rahmen von Bedeutung, da dieser die Geschichtenlänge und somit die literarische Erzählgeschwindigkeit definiert.

Bevorzugt ist ein mit dem Endgerät koppelbares Steuergerät vorgesehen, welches in der Lage ist, die nutzerspezifische Vorlage zu erzeugen und auf das Endgerät zu übertragen. Erfindungsgemäß umfasst ist ebenfalls die Erzeugung und Bearbeitung der nutzerspezifischen Vorlage auf dem Endgerät. Vorzugsweise ist das koppelbare Steuergerät als Smartphone oder Tablet ausgebildet. Die Kopplung zwischen Endgerät und Steuergerät wird vorzugsweise über Wi-Fi und/oder Bluetooth oder allgemein drahtlos bewerkstelligt. Durch die Zuhilfenahme des Steuergeräts ist eine externe Bedienung von z. B. einem Erziehungsberechtigten mit Zugriff auf das Nutzerprofil möglich. Eine interne Bedienung ist selbstverständlich ebenfalls umfasst. Auf diese Weise kann besonders einfach und unmittelbar auf die Inhaltsausgabe reagiert werden, ohne das Endgerät selbst direkt ansteuern zu müssen. Des Weiteren lassen sich so etwaige Änderungen am Nutzerprofil auf eine einfache und übersichtliche Weise vornehmen.

Bevorzugt ist das Endgerät in der Lage, dass benutzereigene Daten auf dem Endgerät und/oder auf dem Steuergerät gespeichert werden können, wobei die Daten wahlweise die Inhaltsausgabe beeinflussen. Benutzereigene Daten im erfindungsgemäßen Sinne beziehen sich beispielsweise auf Fotos, selbsterstellte Bilder und/oder Werke, eigene literarische Werke oder solche Daten, welche den Benutzer selbst betreffen. Das Speichern auf dem Endgerät und/oder auf dem Steuergerät kann beispielsweise ein Hochladevorgang via Wi-Fi und/oder Bluetooth und anschließender Speicherung direkt auf dem Endgerät und/oder Steuergerät darstellen. Eine Cloud-Speicherung ist erfindungsgemäß für diese benutzereigenen Daten und/oder die digitalen Komponenten der Erfindung ebenfalls umfasst. So kann das Endgerät beispielsweise die hochgeladenen nutzereigenen Daten wahlweise und zumindest teilweise in das Nutzerprofil integrieren, um so auf Basis der nutzerspezifischen Vorlage beispielsweise eine die Erinnerungsfotos betreffende Geschichte zu erstellen. Eine direkte Kommunikation des Endgeräts mit dem Cloud-Speicher und dem darauf bevorzugt operierenden generativen Modell ist ebenfalls umfasst.

Im Folgenden wird die Erfindung anhand von Zeichnungen, die lediglich Ausführungsbeispiele darstellen, näher erläutert. Es zeigt:
- Fig. 1: ein erfindungsgemäßes Endgerät in Form eines Teddybären mit Lautsprecherausgabe und internem Steuergerät,
- Fig. 2: ein Endgerät in Form eines Tieres mit zentral verortetem Display,
- Fig. 3: ein Endgerät in Form eines Tablets mit groß ausgelegter Tastensteuerung und
- Fig. 4: eine schematische Darstellung der nutzerspezifischen Anpassungen.

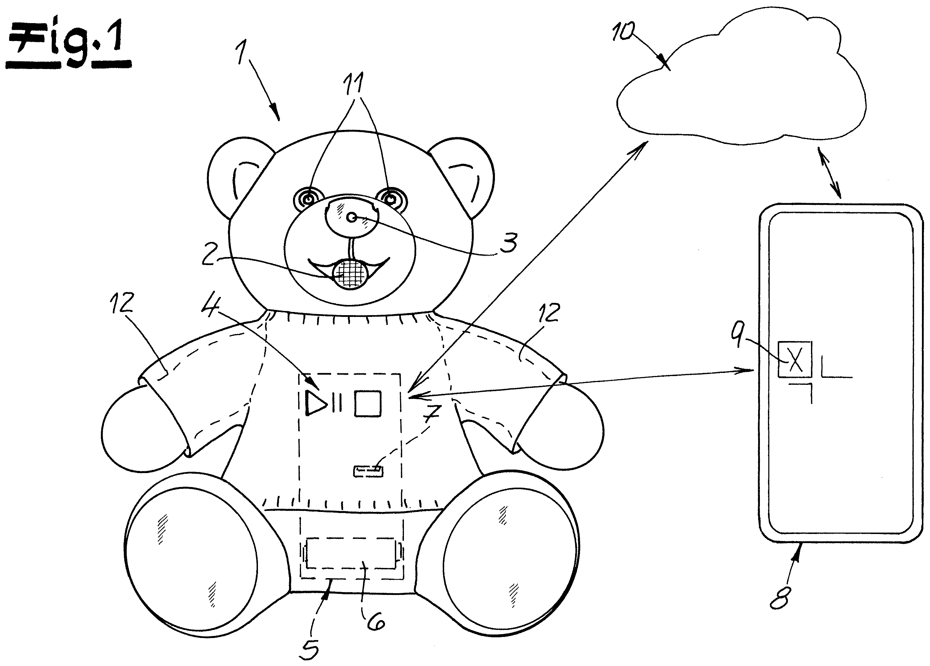

In der Figur 1 ist ein erfindungsgemäßes Endgerät 1 in Form eines Plüsch-Teddybären schematisch dargestellt. Diese Ausprägung des Endgeräts 1 ist beispielsweise für Kleinkinder unter zwei Jahren geeignet. Der Teddybär 1 weist einen im Mund des Teddybären verorteten Lautsprecher 2 zur Ausgabe von Audioinhalten auf. Ebenfalls kopfseitig, und in diesem Beispiel in der Nase des Teddybären verortet, weist dieser ein zur Spracheingabe geeignetes Mikrofon 3 auf. Zusätzlich zu der Spracheingabe ist zudem eine zentral am Bauch des Teddybären vorgesehene Tastensteuerung 4 angebracht. Zur besonders einfachen Bedienung sind lediglich drei Tasten, nämlich Play, Pause und Stop, vorgesehen. Ferner weist der Teddybär 1 ein im Inneren und insbesondere im Bauchraum ein hier lediglich skizziertes Steuergerät 5 auf.

Das Steuergerät 5 ist so ausgeprägt, dass es durch beispielsweise eine einfache Batterie 6 betrieben werden kann. Das Steuergerät 5 ist mit einer rückseitigen Öffnung des Teddybären beispielsweise zum Austausch der Batterie ausgestattet. Zudem weist das Steuergerät 5 eine, beispielsweise als USB-Schnittstelle ausgeprägte, Schnittstelle 7 auf. Ferner ist das Steuergerät 5 koppelbar mit einer mobilen Steuereinheit 8 ausgebildet. Die mobile Steuereinheit 8 ist hier als Smartphone ausgelegt. Die Kopplung findet in dem in Figur 1 dargestellten Beispiel mithilfe einer Wi-Fi-Verbindung, also drahtlos, statt.

Die Vorgehensweise zum Generieren von einer Erzählgeschichte und/oder Lerngeschichte findet wie folgt statt. Zunächst wird über eine in der mobilen Steuereinheit 8 installierte App 9 ein Nutzerprofil 17 erstellt. Dazu wird zunächst ein Fragebogen seitens eines Erziehungsberechtigten in der App 9 ausgefüllt. Der Fragebogen ist hier insbesondere auf Thematiken ausgelegt, welche für Kleinkinder unter zwei Jahren interessant sind. Beispielhaft wird hier nun das Interesse des Benutzers (des Kindes) so festgelegt, dass das Kind beispielsweise Geschichten über Hasen mag. Aufgrund dieses Fragebogens wird nun eine Nutzerpräferenz 16 festgelegt. Die Nutzerpräferenz 16 sowie das ebenfalls in der App 9 eingetragene Benutzeralter 15 bilden in der Summe das Nutzerprofil 17. Dieses Nutzerprofil 17 wird von dem Smartphone 8 auf das Steuergerät 5 übertragen und bildet dort die nutzerspezifische Vorlage 18 für das generative Modell. Die nutzerspezifische Vorlage 18 sieht nun also vor, dass das Kind, mit einem Benutzeralter 15 von zwei Jahren, insbesondere Geschichten über Hasen präferiert. In der Folge wird also auf Grundlage dieser nutzerspezifischen Vorlage 18 eine Erzählgeschichte seitens des generativen Modells erzeugt. Das kann beispielsweise durch eine unter Zuhilfenahme des Mikrofons 3 erfolgte Spracheingabe seitens des Kindes erfolgen, wie z. B. "Erzähl mir eine Geschichte" oder aber durch das Bedienen der Play-Taste der Tastensteuerung 4.

Das Nutzerprofil 17 kann in Abhängigkeit der physischen Formfaktoren des Endgeräts bereits voreingestellte Präferenzen enthalten. Für den konkreten Beispielfall bedeutet das, dass ein Teddybär-Endgerät 1 bereits Geschichten, die Teddybären involvieren, bevorzugt ausgibt. Ebenfalls denkbar ist z. B., dass der Formfaktor des Endgeräts 1, in diesem Fall der Teddybär, als Erzähler auftritt und beispielsweise eine Lerngeschichte erzählt. Diese beispielhafte Voreinstellung ist selbstverständlich optional und deaktivierbar anzusehen.

Das Steuergerät 5 bedient sich zum Erstellen der Erzählgeschichte eines generativen Modells auf Basis künstlicher Intelligenz. Hier ist das Steuergerät 5 so ausgelegt, dass die erforderliche Rechenleistung bzw. Erzeugung der Erzählgeschichte mithilfe eines Cloud-Servers 10 bewerkstelligt wird. Das Steuergerät 5 kommuniziert demnach mithilfe der vorhandenen Wi-Fi-Verbindung mit dem Cloud-Server 10 und generiert dort die erforderliche Erzählgeschichte. Diese wird in der Folge auf das Steuergerät 5 und/oder die mobile Steuereinheit 8 übertragen. Daraufhin erfolgt die Ausgabe seitens des Endgeräts 1 durch den Lautsprecher 3 nahezu ohne Zeitverzug.

Zusätzlich zu der Audioausgabe durch den Lautsprecher 2 ist es zudem vorgesehen, dass ergänzend visuelle Ausgaben im Zusammenhang mit der Erzählgeschichte stattfinden. Das geschieht über LEDs 11 und in Abstimmung mit dem Inhalt der Erzählgeschichte.

Zusätzlich ist es vorgesehen, dass der Teddybär 1 Bewegungen, wie beispielsweise Armbewegungen der Arme 12, ebenfalls im Zusammenspiel und in Abhängigkeit vom Inhalt der Erzählgeschichte, ausführen kann. Denkbar ist es hier z. B., dass wenn die Erzählgeschichte von einem rennendem Hasen berichtet, dass seitens des Teddybären schnell blinkende LED-Signale und/oder schnelle kurze Bewegungen der Arme 12 ausgeführt werden.

Sollte diese beispielhaft gewählte Erzählgeschichte über einen rennenden Hasen durch den Erziehungsberechtigten als z. B. zu aufwühlend empfunden werden, kann dieser mithilfe der App 9 durch eine Eingabe wie beispielsweise "Geschichte soll ruhiger werden" Einfluss auf den folgenden Erzählvorgang nehmen. Die Eingabe wird mithilfe des Smartphones 8 an den Cloud-Server 10 übermittelt, sodass auf Grund dieser Eingabe das generative Modell den Geschichtenverlauf so anpasst, dass die Erzählweise insgesamt ruhiger wird. Diese Anpassung wird nahezu ohne Zeitverzug auf das Steuergerät 5 übertragen und in der Folge wird die Erzählgeschichte über den Lautsprecher 2 ruhiger und/oder gegebenenfalls auch leiser ausgegeben.

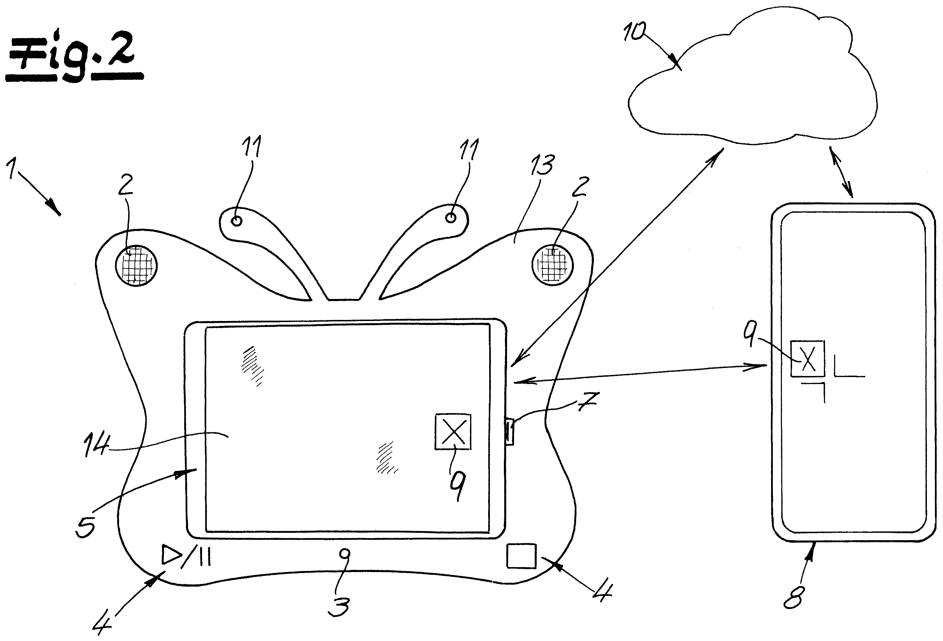

Die Figur 2 zeigt ein erfindungsgemäßes Endgerät, hier insbesondere für Benutzer im Kleinkinderalter, beispielsweise sechs Jahre. Das Endgerät setzt sich im weitesten Sinne aus zwei Hauptkomponenten zusammen. Zum einen das als Tablet ausgeprägte Steuergerät 5, welches den größten Teil des Endgeräts ausmacht. Zusätzlich weist das Endgerät 1 benutzerspezifische Formfaktoren, hier insbesondere Kunststofferweiterungen in Form eines Schmetterlings 13 auf. Das Steuergerät 5 ist mit einem Display, insbesondere Touch-Display 14, ausgestattet.

Ähnlich den vorrausgegangenen Ausführungen die Figur 1 betreffend, arbeitet auch das Endgerät 1 der Figur 2 mit einem auf einem Cloud-Server 10 arbeitenden generativem Modell auf Basis künstlicher Intelligenz, wobei sowohl mithilfe des Endgeräts 1 als auch der mobilen Steuereinheit 8 Befehle und/oder Änderungen an das generative Modell übermittelt werden können.

Das Tablet 1 weist zwei jeweils seitlich verortete Lautsprecher 2 sowie ein ebenfalls außenseitig verortetes Mikrofon 3 zur Audioausgabe respektive Spracheingabe auf. Das akkubetriebene Tablet 1 weist zum Aufladen und/oder zur Datenübertragung die Schnittstelle 7, insbesondere USB-Schnittstelle 7, auf.

Zusätzlich zu der Möglichkeit der Eingabe mithilfe des Touchscreens 5, weist das Tablet 1 zudem eine simpel ausgestaltete Tastensteuerung 4 auf. So kann vorteilhaft bei gesperrten Display 14 dennoch das Starten, Pausieren und Stoppen der Inhaltsausgabe erfolgen.

Das Display 14 ermöglicht es, dass zusätzlich zu der bereits im Zusammenhang mit der Figur 1 beschriebenen Erzählgeschichte nicht nur mit akustischen und mit visuellen Akzenten gearbeitet werden kann, sondern zusätzlich kann das Display 14 auch zu Wiedergabe von Video bzw. Bildinhalten genutzt werden. Es ist vorgesehen, dass das generative Modell zusätzlich zu der auf die Wünsche des Benutzers angepassten Erzählgeschichte auch ein im Einklang mit der Erzählgeschichte stehendes Video oder beispielsweise comicartige Bildabfolgen präsentieren kann.

Zurückkommend auf das bezüglich Figur 1 genannte Beispiel der Hasen-Erzählgeschichte, bedeutet das, dass das Tablet 1 zusätzlich zu der über die Lautsprecher 2 ausgegebenen Erzählgeschichte außerdem auf die Erzählgeschichte abgestimmte Bildabfolgen auf dem Display 14 präsentiert.

Ferner ist das Tablet 1 mit einer Vibrationsfunktion ausgestattet, um neben den optischen und akustischen Inhaltswiedergaben zusätzlich auch ein haptisches Feedback zu ermöglichen.

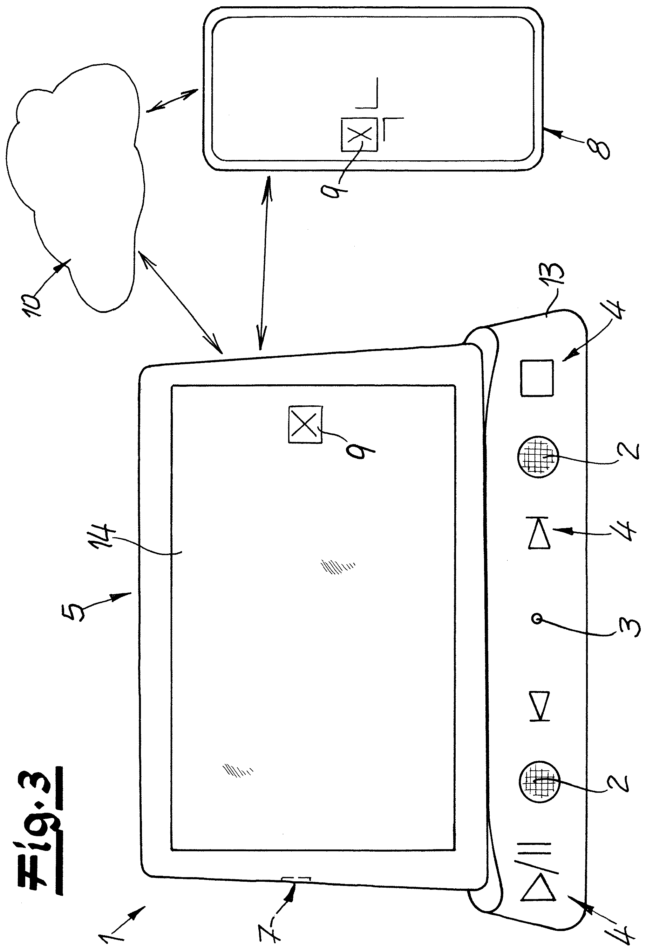

Figur 3 zeigt ein Endgerät 1, welches sich insbesondere an Benutzer höheren Alters, beispielsweise Senioren, richtet. Das Endgerät 1 weist ein als Tablet ausgebildetes Steuergerät 5 mit dem Display 14 sowie einem Formfaktor 13 auf. Der an Senioren orientierte Formfaktor 13 ist als ein einfaches Multimediapanel ausgebildet, mit Tasten 4, Lautsprecher 2 sowie Mikrofon 3, und zwar als außenseitig am Tablet 1 verortetes Kunststoff- und/oder Metallelement. Zudem weist das Endgerät 1 eine zum Aufladen und/oder zur Datenübertragung geeignete Schnittstelle 7, insbesondere USB-Schnittstelle 7, auf.

Das in diesem Fall beschriebene und insbesondere für Senioren geeignete Endgerät 1 zeichnet sich dadurch aus, dass der ausgegebene Inhalt an benutzereigenen Daten orientiert ist. Im konkreten Beispielfall bedeutet dies, dass der Benutzer und/oder ein zweiter Benutzer, wie z. B. ein Familienmitglied oder Angehöriger, direkt mit der Schnittstelle 7 oder indirekt mithilfe der mobilen Steuereinheit 8 benutzereigene Daten in das Benutzerprofil integriert. Eigene Daten können beispielsweise Erinnerungsstücke, wie Fotos, Stationen/Phasen, wie z. B. Wohnorte, Berufe, Partner oder andere Lebensereignisse sein. Die Integration der Daten erfolgt beispielsweise so, dass der Benutzer eigene Erinnerungsfotos mithilfe der App 9 vom Smartphone 8 oder dem Steuergerät 5 in das Benutzerprofil 17 einpflegt. Diese Erinnerungsfotos werden dann in die benutzerspezifische Vorlage 18 integriert und auf den Cloud-Server 10 hochgeladen. Das Benutzerprofil 17 mit den hochgeladenen Erinnerungsfotos wird ferner simultan auf das Endgerät 1 übertragen und aktualisiert.

Zum einen ist es dadurch möglich, diese Erinnerungsfotos auf Befehl lediglich abzuspielen und das Endgerät 1 so als eine Art digitalen Bilderrahmen zu verwenden. Zum anderem kann das generative Modell nun dazu verwendet werden, eine Erzählgeschichte auf Basis der hochgeladenen Erinnerungsfotos zu erstellen.

Wird in dem Benutzerprofil 17 ein Unterordner mit z. B. gruppierten Urlaubsfotos aus einem bestimmten Urlaub erstellt, so kann sich der Benutzer in der Folge auf den Unterordnernamen beziehen, um eine lediglich auf diesen Bildern basierende Erzählgeschichte generieren zu lassen. Das generative Modell auf Basis künstlicher Intelligenz ist in der Folge in der Lage, die hochgeladenen Bilder so zu analysieren, dass auf Basis der dort erkannten Motive und Geschehnisse eine Geschichte in Erzählgeschichtenformat ausgegeben werden kann.

Ferner ist es mithilfe der benutzerbezogenen Daten möglich, rückblickartige Geschichten zu erzeugen, um so die eigene Erinnerung zu stärken. Lerngeschichten zum Erhalt von grundlegenden Eigenschaften und Wissen beispielsweise für demenzerkrankte Personen sind ebenfalls denkbar.

Zusätzlich zu der akustischen Wiedergabe der Erzählgeschichte gibt das Tablet 1 auf dem Display 14 die Erinnerungsfotos passend zu der Erzählgeschichte wieder und/oder zusätzlich generierte Bilder bzw. Videos auf Basis der hochgeladenen Erinnerungsfotos.

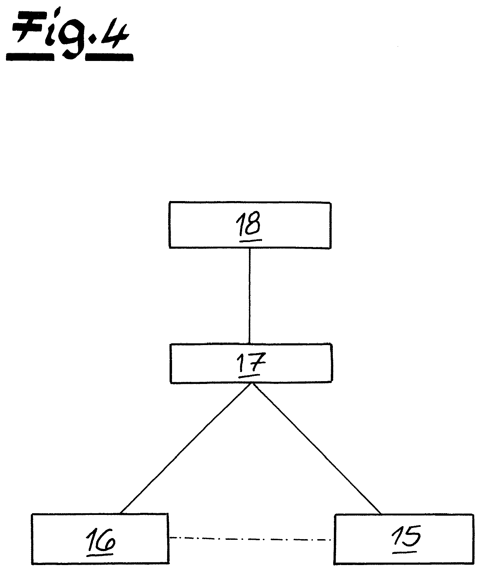

Die Figur 4 zeigt schematisch den Ordnungsaufbau der verschiedenen Hierarchien, insbesondere in Bezug auf die zur Erzeugung des Inhalts verwendeten Informationen. Erfindungsgemäß ist die Einspeisung von Informationen seitens des Benutzers so ausgelegt, dass zunächst die Nutzerpräferenz 16 festgelegt wird. Das geschieht, wie bereits zu Figur 2 vorgetragen, beispielhaft mit einem Fragebogen. Das Benutzeralter 15 ist bereits in dem Endgerät 1, zumindest in einer Altersspanne, festgelegt, kann jedoch vom Benutzer nachträglich angepasst werden. Das dient z. B. dafür, dass die Ausgabe von nicht für Benutzer in dem spezifischen Benutzeralter geeigneten Inhalten verhindert wird.

Das endgerätseitig festgelegte Benutzeralter 15 in Kombination mit der Nutzerpräferenz 16 bildet das Nutzerprofil 17. Das Nutzerprofil 17 enthält wahlweise zudem benutzereigene Daten, wie z. B. Erinnerungsfotos, welche durch die App 9 eingepflegt werden können. Das Nutzerprofil 17 wird sowohl endgerätseitig sowie auch auf dem Cloud-Server 10 und gegebenenfalls auch auf der mobilen Steuereinheit 8 gespeichert und fortlaufend aktualisiert. Auf Basis des Nutzerprofils 17 wird in der Folge eine für das generative Modell geeignete nutzerspezifische Vorlage 18 erstellt, welche schlussendlich als Grundlage für den erzeugten Inhalt verwendet wird.

## Patentansprüche

1. Benutzerspezifisches elektronisches Endgerät, insbesondere an das Nutzeralter angepasstes Endgerät, zur akustischen und/oder optischen und/oder haptischen Wiedergabe von Inhalt, der unter Verwendung eines generativen Models auf Basis künstlicher Intelligenz erzeugt wird, wobei der erzeugte Inhalt an den Benutzer angepasst ist,
wobei das Erzeugen des Inhalts unter Verwendung des generativen Models auf Grundlage einer nutzerspezifischen Vorlage geschieht,
wobei die nutzerspezifische Vorlage eine dem Nutzerprofil zugeordnete Nutzerpräferenz sowie das Nutzeralter enthält.

2. Endgerät nach Anspruch 1, **dadurch gekennzeichnet, dass** der Inhalt nutzerspezifische Geschichten, insbesondere Erzählgeschichten und/oder Lerngeschichten, umfasst.

3. Endgerät nach Anspruch 1 oder 2, **dadurch gekennzeichnet, dass** die erzeugten Geschichten insbesondere an das Nutzeralter angepasst sind und nutzeralterspezifischen, beispielsweise endgerätseitig festgelegten, Rahmenparametern folgen.

4. Endgerät nach einem der Ansprüche 1 bis 3, **dadurch gekennzeichnet, dass** der nutzerspezifische Inhalt während der Wiedergabe vom Benutzer durch eine Benutzereingabe beeinflusst werden kann.

5. Endgerät nach einem der Ansprüche 1 bis 4, **dadurch gekennzeichnet, dass** das Nutzerprofil Ausschlusskriterien berücksichtigt.

6. Endgerät nach einem der Ansprüche 1 bis 5, **dadurch gekennzeichnet, dass** die Nutzerpräferenz auf einer fragebogenbasierten Festlegung von Rahmenparametern basiert.

7. Endgerät nach einem der Ansprüche 1 bis 6, **dadurch gekennzeichnet, dass** das Endgerät nutzerspezifische Formfaktoren aufweist.

8. Endgerät nach einem der Ansprüche 1 bis 7, **dadurch gekennzeichnet, dass** die nutzerspezifischen Formfaktoren Avatare und/oder Tiere und/oder Farbakzente umfassen.

9. Endgerät nach einem der Ansprüche 1 bis 8, **dadurch gekennzeichnet, dass** das Endgerät eine nutzerspezifische Tastensteuerung aufweist.

10. Endgerät nach einem der Ansprüche 1 bis 9, **dadurch gekennzeichnet, dass** die optische Inhaltswiedergabe beispielsweise über ein Display und/oder LEDs erfolgt.

11. Endgerät nach einem der Ansprüche 1 bis 10, **dadurch gekennzeichnet, dass** die haptische Wiedergabe beispielsweise über Vibrationen und/oder Bewegungen seitens des Endgeräts erfolgt.

12. Endgerät nach einem der Ansprüche 1 bis 11, **dadurch gekennzeichnet, dass** die akustische Wiedergabe des Inhalts als Sprachausgabe, beispielsweise über zumindest einen Lautsprecher, erfolgt.

13. Endgerät nach einem der Ansprüche 1 bis 12, **dadurch gekennzeichnet, dass** die Eingabe seitens des Benutzers als Spracheingabe, beispielsweise mithilfe eines Mikrofons, erfolgt.

14. Endgerät nach einem der Ansprüche 1 bis 13, **dadurch gekennzeichnet, dass** die Inhaltswiedergabe in einem vom Benutzer festgelegten Rahmen, insbesondere zeitlichen Rahmen, erfolgt.

15. Endgerät nach einem der Ansprüche 1 bis 14, **dadurch gekennzeichnet, dass** ein mit dem Endgerät koppelbares Steuergerät die nutzerspezifische Vorlage erzeugt und auf das Endgerät überträgt.

16. Endgerät nach einem der Ansprüche 1 bis 15, **dadurch gekennzeichnet, dass** nutzereigene Daten auf dem Endgerät und/oder auf dem Steuergerät gespeichert werden können, wobei die Daten wahlweise die Inhaltsausgabe beeinflussen.

## Geänderte Patentansprüche

### Geänderte Patentansprüche gemäss Regel 137(2) EPÜ.

1. Benutzerspezifisches elektronisches Endgerät, insbesondere an das Nutzeralter angepasstes Endgerät, zur akustischen und/oder optischen und/oder haptischen Wiedergabe von Inhalt, der unter Verwendung eines generativen Models auf Basis künstlicher Intelligenz erzeugt wird, wobei der erzeugte Inhalt an den Benutzer angepasst ist,
wobei das Erzeugen des Inhalts unter Verwendung des generativen Models auf Grundlage einer nutzerspezifischen Vorlage geschieht,
wobei die nutzerspezifische Vorlage eine dem Nutzerprofil zugeordnete Nutzerpräferenz sowie das Nutzeralter enthält,
**dadurch gekennzeichnet, dass**
der nutzerspezifische Inhalt während der Wiedergabe vom Benutzer durch eine Benutzereingabe in Gestalt einer Spracheingabe, Tasteneingabe oder durch ein externes Medium beeinflusst werden kann.

2. Endgerät nach Anspruch 1, **dadurch gekennzeichnet, dass** der Inhalt nutzerspezifische Geschichten, insbesondere Erzählgeschichten und/oder Lerngeschichten, umfasst.

3. Endgerät nach Anspruch 1 oder 2, **dadurch gekennzeichnet, dass** die erzeugten Geschichten insbesondere an das Nutzeralter angepasst sind und nutzeralterspezifischen, beispielsweise endgerätseitig festgelegten, Rahmenparametern folgen.

4. Endgerät nach einem der Ansprüche 1 bis 3, **dadurch gekennzeichnet, dass** das Nutzerprofil Ausschlusskriterien berücksichtigt.

5. Endgerät nach einem der Ansprüche 1 bis 4, **dadurch gekennzeichnet, dass** die Nutzerpräferenz auf einer fragebogenbasierten Festlegung von Rahmenparametern basiert.

6. Endgerät nach einem der Ansprüche 1 bis 5, **dadurch gekennzeichnet, dass** das Endgerät nutzerspezifische Formfaktoren aufweist.

7. Endgerät nach einem der Ansprüche 1 bis 6, **dadurch gekennzeichnet, dass** die nutzerspezifischen Formfaktoren Avatare und/oder Tiere und/oder Farbakzente umfassen.

8. Endgerät nach einem der Ansprüche 1 bis 7, **dadurch gekennzeichnet, dass** das Endgerät eine nutzerspezifische Tastensteuerung aufweist.

9. Endgerät nach einem der Ansprüche 1 bis 8, **dadurch gekennzeichnet, dass** die optische Inhaltswiedergabe beispielsweise über ein Display und/oder LEDs erfolgt.

10. Endgerät nach einem der Ansprüche 1 bis 9, **dadurch gekennzeichnet, dass** die haptische Wiedergabe beispielsweise über Vibrationen und/oder Bewegungen seitens des Endgeräts erfolgt.

11. Endgerät nach einem der Ansprüche 1 bis 10, **dadurch gekennzeichnet, dass** die akustische Wiedergabe des Inhalts als Sprachausgabe, beispielsweise über zumindest einen Lautsprecher, erfolgt.

12. Endgerät nach einem der Ansprüche 1 bis 11, **dadurch gekennzeichnet, dass** die Eingabe seitens des Benutzers als Spracheingabe, beispielsweise mithilfe eines Mikrofons, erfolgt.

13. Endgerät nach einem der Ansprüche 1 bis 12, **dadurch gekennzeichnet, dass** die Inhaltswiedergabe in einem vom Benutzer festgelegten Rahmen, insbesondere zeitlichen Rahmen, erfolgt.

14. Endgerät nach einem der Ansprüche 1 bis 13, **dadurch gekennzeichnet, dass** ein mit dem Endgerät koppelbares Steuergerät die nutzerspezifische Vorlage erzeugt und auf das Endgerät überträgt.

15. Endgerät nach einem der Ansprüche 1 bis 14, **dadurch gekennzeichnet, dass** nutzereigene Daten auf dem Endgerät und/oder auf dem Steuergerät gespeichert werden können, wobei die Daten wahlweise die Inhaltsausgabe beeinflussen.
